# EUROPEAN PATENT SPECIFICATION

(11) **EP 3 359 360 B1**
(45) Date of publication and mention of the grant of the patent: **21.08.2019**
(21) Application number: 16778050.1
(22) Date of filing: 07.10.2016
(51) Int. Cl.: B27N 3/00

(54) **WOOD PARTICLE BOARDS**
HOLZSPANPLATTEN
PANNEAUX DE PARTICULES DE BOIS

(30) Priority: 09.10.2015 GB 201517882
(43) Date of publication of application: 15.08.2018
(73) Proprietor: Knauf Insulation SPRL, 4600 Visé (BE)
(72) Inventor: HAND, Richard, St Helens Merseyside WA10 3NS (GB)
(74) Representative: ARC-IP
(86) International application number: PCT/EP2016/074034
(87) International publication number: WO 2017/060450

(56) References cited:
- WO-A1-2013/150123
- WO-A1-2014/027115
- WO-A1-2015/001702
- WO-A2-2016/109164
- R.M. GURJAR: "Effect of different binders on properties of particle board from cotton seed hulls with emphasis on water repellency", BIORESOURCE TECHNOLOGY., vol. 43, no. 2, 1 January 1993 (1993-01-01), pages 177-178, XP055325209, GB ISSN: 0960-8524, DOI: 10.1016/0960-8524(93)90179-F
- Antonios N Papadopoulos: "PEER-REVIEWED ARTICLE PROPERTY COMPARISONS AND BONDING EFFICIENCY OF UF AND PMDI BONDED PARTICLEBOARDS AS AFFECTED BY KEY PROCESS VARIABLES", Papadapolous BioResources, 1 January 2006 (2006-01-01), pages 201-208, XP055325220, Retrieved from the Internet: URL:https://www.ncsu.edu/bioresources/BioR es_01/BioRes_01_2/BioRes_01_2_201_208_Papa dapolous_Particlebd_UF_PDMI.pdf

## Description

The present invention relates to wood particle boards, more specifically multilayer wood particle boards, such as three layer particle boards, and a method for their production.

A wood particle board is a composite material manufactured from wood particles, for example wood chips, sawmill shavings and/or saw dust at varying particle sizes held together by a binder and used especially for the manufacture of furniture, such as cabinets, kitchens and bathroom furniture. Generally, wood particle board (which is sometimes referred to as "chipboard") is produced by mixing wood particles and a binder composition, e.g. a thermo-curable resin, subsequently forming the resulting mixture into a sheet or mat and compressing said sheet or mat under elevated temperatures. In order to improve the visual appearance and/or durability, a veneer or melamine layer may be applied to the board's surface(s).

Commercially the most common particle boards are so-called three layer particle boards that comprise a core layer and two surface layers. The particle size of the particles used for the core layer and the particle size of the surface layer particles are generally different, smaller particles generally being used for the surface layers than for the core layer. This may result in a density gradient through the cross-section of the board with the surface layers being of greater density than the core layer. The outer surfaces of known particle boards, more specifically of phenol-formaldehyde or urea-formaldehyde bonded multi-layer particle boards, tend to show irregularities, such as pits and/or bubbles, that may ultimately affect the final surface aspect after coverage by appropriate veneer sheets or melamine resin bonded sheets. Without being bound by theory, it is believed that formaldehyde based binder tends to form blobs or to decompose at higher platen temperatures in the press thus generating surface defects. Boards showing this type of surface defects are unsuitable for subsequent veneering or application of a melamine surface layer because surface defects of the wood particle board tend to provoke defects that are visible on the outer surface of the face veneer. Furthermore, such defects are often only apparent once the veneer has been applied. The production process of such boards hence generates relatively high levels of waste boards; as a result, production costs for such boards tend to be high.

It has already been suggested to use a polyester film to fill in rough core veneer of plywood boards, and thus eliminate telegraphing of the surface defects in the face veneer. The use of an additional polyester film however adds additional costs to the final board and is unsuitable for low cost particle boards.

The present invention seeks to solve the problem differently. The present invention more specifically seeks to provide multi-layer particle boards that show improved surface aspect and are well suited for lamination, such as decorative laminates or other surface coverings usually applied on particle boards, notably showing no or at least reduced pits or bubbles on the outer surfaces that may affect the surface finish after coverage by appropriate veneer sheets, decorative layers or melamine resin bonded sheets.

According to another aspect, the present invention seeks to provide a process for the manufacturing of such improved multi-layer particle boards which generates reduced quantities of waste boards.

The invention now provides a multi-layer particle board comprising at least one core layer and a surface layer, preferably at least one core layer and two surface layers, the surface layer particles being bonded by a binder comprising carbohydrate based reaction products and the core layer particles being bonded by a resin binder other than the carbohydrate binder resin used in the surface layer, such as a resin binder comprising a resin selected from phenol formaldehyde, urea formaldehyde, melamine-urea-formaldehyde and isocyanate, such as methylene diphenyl diisocyanate, or polyester.

The multi-layer particle board may also include core layer particles bonded by a binder comprising carbohydrate reaction products, as long as the resin formed is different from the resin binder used in the surface layer, for example a binder resin comprising carbohydrate reaction products at different ratios or concentrations or carbohydrate reaction products different from those contained in the surface layer or layers.

The particle boards of the invention may comprise boards commonly called particle boards or oriented strand boards or medium density fiber boards or high density fiber boards.

The binder of the surface layer advantageously comprises reaction products of a carbohydrate component, preferably a reducing sugar, and a nitrogen source, preferably an amine component, more particularly a primary amine component. Said carbohydrate based reaction products may further comprise carbohydrate based polyesters formed by the reaction of a carbohydrate component with an acid or acid anhydride. Advantageously, the said binder comprises at least 25 % wt, or at least 50 % wt, or at least 75 % wt or at least 95 % wt of such carbohydrate based reaction products.

Herein, the term "carbohydrate component" includes any carbohydrate compound which is capable of reacting (e.g. by application of heat) with an acid or anhydride or nitrogen source, and optionally further crosslinkers, in order to form a suitably cured binder. According to the present invention, the carbohydrate component may be selected from the group consisting of monosaccharides, disaccharides, polysaccharides or a reaction product thereof. The carbohydrate component may comprise at least one reducing sugar; it may consist essentially of one or more reducing sugars.

As used herein, the term "reducing sugar" indicates one or more sugars that contain aldehyde groups, or that can isomerize, i.e. tautomerize, to contain aldehyde groups, which groups may be oxidized with, for example, Cu-ions to afford carboxylic acids. According to the present invention, any such carbohydrate component may be optionally substituted, for example with one or more of hydroxy, halo, alkyl and alkoxy. In any such carbohydrate component, one or more chiral centers may be present, and both possible optical isomers at each chiral center are included in the invention described herein. Further, it is also to be understood that various mixtures, including racemic mixtures, or other diastereomeric mixtures of the various optical isomers of any such carbohydrate component, as well as various geometric isomers thereof, may be used in one or more embodiments described herein.

Moreover, while non-reducing sugars, for instance sucrose, may not be preferable, they may none the less be useful within the scope of the present invention, for example by in situ conversion to a reducing sugar. Further, it is also understood that a monosaccharide, a disaccharide, or a polysaccharide may be partially reacted with a precursor to form a carbohydrate reaction product. To the extent that the carbohydrate reaction product is derived from a monosaccharide, a disaccharide, or a polysaccharide, and maintains reactivity, preferably similar reactivity, with the amine component to form reaction products similar to those of a monosaccharide, a disaccharide, or a polysaccharide with an amine component, the carbohydrate reaction product is within the scope of the expression "carbohydrate component".

The carbohydrate based binder may comprise a binder composition as described in any of WO 2007/014236, WO 2009/019232, WO 2009/019235, WO 2011/138458, WO 2011/138459 or WO 2013/150123.

Preferably, any carbohydrate component should be sufficiently non-volatile to maximize its ability to remain available for reaction with the amine component or other reactants mentioned above. The carbohydrate component may be a monosaccharide in its aldose or ketose form, including a triose, a tetrose, a pentose, a hexose, or a heptose; or a polysaccharide; or combinations thereof. For example, when a triose serves as the carbohydrate component, or is used in combination with other reducing sugars and/or a polysaccharide, an aldotriose sugar or a ketotriose sugar may be utilized (including glyceraldehyde and dihydroxyacetone, respectively). When a tetrose serves as the carbohydrate component, or is used in combination with other reducing sugars and/or a polysaccharide, aldotetrose sugars (including erythrose and threose) and ketotetrose sugars (including erythrulose), may be utilized. Moreover, when a pentose serves as the carbohydrate component, or is used in combination with other reducing sugars and/or a polysaccharide, aldopentose sugars (including ribose, arabinose, xylose, and lyxose) and ketopentose sugars (including ribulose, arabulose, xylulose, and lyxulose), may be utilized. When a hexose serves as the carbohydrate component, or is used in combination with other reducing sugars and/or a polysaccharide, aldohexose sugars (including glucose (i.e. dextrose), mannose, galactose, allose, altrose, talose, gulose, and idose) and ketohexose sugars (including fructose, psicose, sorbose and tagatose), may be utilized. When a heptose serves as the carbohydrate component, or is used in combination with other reducing sugars and/or a polysaccharide, a ketoheptose sugar (including sedoheptulose) may be utilized. Other stereoisomers of such carbohydrate components not known to occur naturally are also contemplated to be useful in preparing the binder compositions as described herein. In one embodiment, the carbohydrate component comprises high fructose corn syrup (HFCS).

The carbohydrate component may be polysaccharide with a low degree of polymerization e.g. molasses, starch, cellulose hydrolysates, or mixtures thereof. According to a specific example, the carbohydrate component is a starch hydrolysate, a maltodextrin, or a mixture thereof. While carbohydrates of higher degrees of polymerization may not be preferable, they may none the less be useful within the scope of the present invention particularly by in situ depolymerization.

Further, herein the expression "nitrogen source" includes any chemical compound, or mixture of compounds, which contain(s) at least one nitrogen atom and which is/are capable of reacting with the at least one carbohydrate component.

The at least one nitrogen source may be selected from NH₃, an inorganic amine or an organic amine comprising at least one primary amine group, as well as salts thereof. It may comprise NH₃ used as such (e.g. in form of an aqueous solution), or an inorganic and organic ammonium salt, for example ammonium sulfate (AmSO₄), ammonium phosphate, e.g. diammonium phosphate, ammonium chloride, ammonium nitrate or ammonium citrate.

The nitrogen source may comprise a polyamine. Herein, the term "polyamine" includes any organic compound having two or more amine groups, which may independently be substituted or unsubstituted. For example, the polyamine may be a primary polyamine. As used herein, a "primary polyamine" is an organic compound having two or more primary amine groups (-NH₂). Within the scope of the term primary polyamine are those compounds which can be modified *in situ* or isomerize to generate a compound having two or more primary amine groups (-NH₂). The primary polyamine may be a molecule having the formula H₂N-Q-NH₂, wherein Q is an alkanediyl, cycloalkanediyl, heteroalkanediyl, or cycloheteroalkanediyl, each of which may be optionally substituted. For example, Q may be an alkanediyl group selected from -C₂-C₂₄-, an alkanediyl group selected from -C₂-C₉-, or an alkanediyl group selected from -C₃-C₇-. According to a preferred embodiment, Q is a C₆ alkanediyl. According to another embodiment, Q may be a cyclohexanediyl, cyclopentanediyl or cyclobutanediyl, or a divalent benzyl radical. In this context, it should be noted that certain authors prefer using the term "alkyl" instead of the chemically more correct "alkanediyl" nomenclature; the same chemical group is meant.

As used herein, the term "alkanediyl" means a chain of carbon atoms, which may optionally be branched, preferably of limited length, including -C₁-C₂₄-, -C₁-C₁₂-, -C₁-C₈-, -C₁-C₆-, and -C₁-C₄-. Shorter alkanediyl groups may add less lipophilicity to the compound and accordingly will have different reactivity towards the carbohydrate component and/or solubility.

As used herein, the term "cycloalkanediyl" means a chain of carbon atoms, which may optionally be branched, where at least a portion of the chain is cyclic and also includes polycyclic structures, for example, cyclopropanediyl, cyclopentanediyl, cyclohexanediyl, 2-methylcyclopropanediyl, 2-ethylcyclopentanediyl, adamantanediyl. Furthermore, the chain forming cycloalkanediyl is advantageously of limited length, including -C₃-C₂₄-, -C₃-C₁₂-, -C₃-C₈-, -C₃-C₆-, and-C₅-C₆-. Shorter alkanediyl chains forming cycloalkanediyl may add less lipophilicity to the compound and accordingly will have a different behavior.

As used herein, the term "heteroalkanediyl" means a chain of atoms that includes both carbon and at least one heteroatom, and is optionally branched. Examples of such heteroatoms include nitrogen, oxygen, and sulfur. In certain variations, said hetero-atoms also include phosphorus, and selenium. In one embodiment, the heteroalkanediyl is a polyether. As used herein, the term "cycloheteroalkanediyl", includes a chain of atoms that includes both carbon and at least one heteroatom, such as heteroalkanediyl, and may optionally be branched, where at least a portion of the chain is cyclic. Particularly, examples of cycloheteroalkanediyl include divalent tetrahydrofuryl, pyrrolidinyl, tetrahydropyranyl, piperidinyl, morpholinyl, piperazinyl, homopiperazinyl, quinuclidinyl.

Herein, the term "optionally substituted" means the replacement of one or more hydrogen atoms with other functional groups. Such other functional groups may include amino, hydroxyl, halo, thiol, alkyl, haloalkyl, heteroalkyl, aryl, arylalkyl, arylheteroalkyl, nitro, sulfonic acids and derivatives thereof, carboxylic acids and derivatives thereof.

The primary polyamine may be a diamine, triamine, tetramine, or pentamine, for example: a triamine selected from a diethylenetriamine, 1-piperazineethaneamine, or bis(hexamethylene)triamine; triethylenetetramine; or tetraethylenepentamine.

One feature of the primary polyamine is that it may possess low steric hindrance. For example, 1,2-diaminoethane, 1,4-diaminobutane, 1,5-diaminopentane, 1,6-diaminohexane, 1,12-diaminododecane, 1,4-diaminocyclohexane, 1,4-diaminoben-zene, diethylenetriamine, triethylenetetramine, tetraethylenepentamine, 1-piperazine-ethaneamine, 2-methyl-pentamethylenediamine, 1,3-pentanediamine, and bis(hexamethylene)triamine, as well as 1,8-diaminooctane have low steric hindrance.

Preferably the amine component comprises or consists of 1,6-diaminohexane (hexamethylenediamine, HMDA) or 1,5-diamino-2-methylpentane (2-methyl-pentamethylenediamine).

In another embodiment, the amine component comprises or consists of a polyether-polyamine, which may be a diamine or a triamine, for example a trifunctional primary amine having an average molecular weight of 440 known as Jeffamine T-403 Polyetheramine (e.g. Huntsman Corporation).

In a further embodiment, the nitrogen source may comprise or consist of a polymeric polyamine, for example chitosan, polylysine, polyethylene imine, poly(N-vinyl-N-methyl amine), polyaminostyrene, polyvinyl amine (which can be a homopolymer or a copolymer).

The term "binder composition" as used herein means all ingredients applied to the wood particles and/or present on the wood particles, notably prior to curing (other than the wood particles themselves and any moisture in the wood particles), including reactants, solvents (including water), and additives. The binder composition, notably the surface layer binder composition, may be at least partially pre-reacted and hence comprise one or more reaction product(s) of the reactants. The term "dry weight of the binder composition" as used herein means the weight of all components of the binder composition other than any water that is present (whether in the form of liquid water or in the form of water of crystallization).

In the carbohydrate based binder composition, the carbohydrate component, may make up:
- at least 30%, preferably at least 40%, preferably at least 50%, more preferably at least 60%, more preferably at least 70%, even more preferably at least 80% by dry weight of the binder composition; and/or
- less than 97%, more preferably less than 95 % by dry weight of the binder composition.

In the carbohydrate based binder composition, the nitrogen source may make up:
- less than 50% or less than 40%, preferably less than 30%, more preferably less than 25% by dry weight of the binder composition; and/or
- at least 2.5%, preferably at least 5%, more preferably at least 10% by dry weight of the binder composition.

The carbohydrate-based binder composition may comprise (i) at least 25%, and preferably at least 40%, at least 50% or at least 60% by dry weight of: (a) carbohydrate component(s) and nitrogen source(s) and/or (b) curable reaction product(s) of carbohydrate component(s) and nitrogen source(s).

Preferably, the ratio of carbonyl groups in the carbohydrate component to reactive amino groups in the nitrogen source is in the range of 5:1 to 1:2. For example, the ratio of carbonyl groups to reactive amino groups may be in the range of 5:1 to 1:1.8, 5:1 to 1:1.5, 5:1 to 1:1.2, 5:1 to 1:1, 5:1 to 1:0.8 and 5:1 to 1:0.5. Further examples include the ratios 4:1 to 1:2, 3.5:1 to 1:2, 3:1 to 1:2, 2.5:1 to 1:2, 2:1 to 1:2 and 1.5:1 to 1:2.

Herein, the term "reactive amino group" means any amino group in the nitrogen source which is capable of reacting with the carbohydrate component. Specifically, examples of such reactive amino groups include primary and secondary amino groups, amide groups, imine and imide groups, as well as cyanate and isocyanate groups.

The binder composition(s) may be applied to the wood particles, in the form of an aqueous composition, preferably an aqueous solution or dispersion, notably in which the dry weight of the aqueous binder composition makes up ≥ 10 wt% , ≥ 20 wt% , ≥ 30 wt% , ≥ 40 wt% , ≥ 45 wt%, ≥ 50 wt%, ≥ 55 wt% or ≥ 60 wt% and/or ≤ 95 wt%, ≤ 90 wt%, ≤ 85 wt% or ≤ 80 of the total weight of the aqueous binder composition.

It has been found that multi layer particle boards as defined above show improved outer surfaces which do not show or at least show less surface irregularities which have an undesirable effect on the final veneer sheet or melamine sheet. As a result, the quantity of waste boards can be significantly reduced or even eliminated.

Furthermore, the surface soundness has been shown to be particularly advantageous.

The combination of a formaldehyde based binder for bonding core layer particles with a carbohydrate based binder for bonding surface layer particles further allows for operation at high processing temperatures, because of the high temperature resistance of carbohydrate based binders; operation at high line temperatures may lead to reduced residence time between the heating plates and thus to increased line speed. Furthermore, the presence of high temperature resistant surface layer binder is particularly advantageous in the case of particle board production requiring extended press closure times. In the case of known formaldehyde based binder bonded particle board production requiring extended press closure times, the surface layer binder tends to polymerize too early (as compared to the core layer binder) hence leading to unsatisfactory surface layers. These extended closure times or high temperature may cause thermal degradation of formaldehyde based binders.. Preferred embodiments of the invention overcome this difficulty: the carbohydrate based surface layer binder better resists the high temperatures of the press during an extended period of time, thereby not jeopardizing proper surface formation, and allowing for adequate polymerization of the core layer binder.

The binder comprising carbohydrate based reaction products is preferably a binder whose reagents do not comprise any added formaldehyde. It may be "substantially formaldehyde free", that is to say that it liberates less than 5 ppm formaldehyde as a result of drying and/or curing (or appropriate tests simulating drying and/or curing); more preferably it is "formaldehyde free", that is to say that it liberates less than 1 ppm formaldehyde in such conditions.

It has further been found that the surface layer comprising an essentially formaldehyde free binder forms a barrier for formaldehyde migration from a core layer. This advantageous property may further be reinforced by presence of formaldehyde scavengers in the surface layer. Also, the presence of essentially formaldehyde free surface layers allows for increased formaldehyde levels in the core layers whilst still maintaining the global formaldehyde content of the board within desirable limits. Increasing formaldehyde content in the core layer(s) may lead to improved mechanical properties of the particle board. In the alternative, for given mechanical properties, the binder content may be reduced. Taken differently, the combination of core layers bonded with formaldehyde based binder and surface layers bonded with binder based on carbohydrate reaction products creates an opportunity to reduce the overall formaldehyde content of particle boards.

The particle board may advantageously combine the good hydrophobicity or water resistant properties attributed to the carbohydrate based surface binder and the mechanical properties attributed to low cost core layer binder.

Furthermore, according to a preferred embodiment of the present invention, the carbohydrate based binder may be used in combination with a non-carbohydrate polyhydroxy component. Examples of non-carbohydrate polyhydroxy components which can be used in accordance with the present invention include, but are not limited to, glycerol, polyethylene glycol, polypropylene glycol, trimethylolpropane, , pentaerythritol, polyvinyl alcohol, partially hydrolyzed polyvinyl acetate, fully hydrolyzed polyvinyl acetate, and mixtures thereof. Glycerol, polyethylene glycol and polypropylene glycol are preferred. More particularly the addition of glycerol has shown further improved surface aspects of multi layered particle boards. The non-carbohydrate polyhydroxy component may be used in the range of 0.1 to 25 wt.%, preferably 2 to 20 wt.%, more preferably 5 to 15 wt.% by dry weight in the binder composition.

In addition to providing improved surface aspects of multi-layered particle boards of the invention, the non-carbohydrate polyhydroxy component has been shown to function as a processing aid; it may be used to prevent sticking and assists in providing suitable flow properties to the resin and/or resin precursor.

The binder of the core layer(s) and/or the binder of the surface layer(s) or the particle compositions of relevant layers may comprise one or more adjuvants, for example waxes, dyes release agents and formaldehyde scavengers (notably urea, tannins, quebracho extract, ammonium phosphate, bisulfite).

The thickness of the wood particle board may be ≥5 mm, ≥ 8 mm, ≥ 10 mm, or ≥ 15 mm and/or ≤ 100 mm, ≤ 80 mm, ≤ 60 mm, ≤ 50 mm, ≤ 45 mm or ≤ 25 mm. Preferred thicknesses are in the range of 10 to 45 mm or 16 to 22mm. The length of the particle board may be ≥ 1.5 m, ≥ 2 m, ≥ 2.5 m or ≥ 3 m and/or ≤ 8 m, ≤ 6 m or ≤ 5 m, although depending on available equipment, board length greater than 8 m may be obtained. The width of the particle board may be ≥ 1 m, ≥ 1.2 m, ≥ 1.5m or ≥ 1.8 m and/or ≤ 4 m, ≤ 3 m or ≤ 3.5 m.

The wood particle boards may have edges which are trimmed and/or cut and/or machined; they may be piled up and provided as a package comprising a plurality of boards arranged and/or bound together, for example to facilitate transport; the package may comprise an enveloping film, for example of a plastics material.

The term "wood particle" used herein means wood particles or fibers, including wood chips, wood flakes, sawmill shavings and saw dust or mixtures thereof. The core layer and surface layer particles have granular sizes common in the art of such multi-layer particle boards, preferably of 1 - 10 mm for the core layer particles and less than 1.5 mm for the surface layer particles. Granular sizes of less than 1 mm and as low as 0.05 mm may also be appropriate for the surface layer in some applications. The aforementioned granular sizes are in respect of at least 90% by weight of the wood particles, preferably at least 95% by weight. Wood particles from both virgin wood and/or reclaimed wood may be used; the wood may comprise birch, beech, alder, pine, spruce, tropical wood or wood mixtures. Preferably, the wood particles contacted with the binder composition(s) have a moisture content of less than 8%, less than 6% or less than 5% moisture, for example due to pre-drying; they may be pre-dried to a moisture content of 1 to 5% moisture, e.g. 2 to 4% moisture or 1.5 to 3.5% moisture.

According to another aspect, the present invention also provides a process for the manufacture of multi-layer particle boards comprising at least one core layer and a surface layer, preferably two surface layers, comprising the provision of wood particles suitable for core layers and the contacting of core layer particles with a core layer binder composition, the provision of surface layer particles and the contacting of surface layer particles with a surface layer binder composition, the arrangement of layers of relevant resinated particles such as to form a layered mat of loosely arranged particles comprising in sequence or reverse sequence at least a first surface layer comprising resinated surface layer particles and at least one core layer comprising resinated core layer particles, and possibly a second surface layer, and subjecting the mat of resinated particles to pressure and curing, wherein the surface layer binder composition is selected from binder compositions comprising carbohydrate component and a nitrogen source or acid or anhydride thereof and the core layer binder composition is selected from resin binder compositions that form binder resin other than the carbohydrate binder used in the surface layer(s), such as a binder composition comprising phenol and formaldehyde, urea and formaldehyde or isocyanate, such as methylene diphenyl diisocyanate.

The binder composition(s) may be applied to the wood particles by spraying, for example by passing the wood particles through a spray of the binder composition or by spraying the binder composition over the wood particles whilst the wood particles are being mixed. Preferably, the wood particles are mixed subsequently to application of the binder composition, for example by tumbling, notably in a mixer or bunker.

The curing may be performed separately from the pressing or simultaneously with the pressing, for instance in a press, between heated platens. Other curing techniques known per se, applying different energy sources may also be applied. As an example, RF or IR energy may be applied for curing purposes. UV light may also serve curing.

The binder composition used for the surface layer(s) may be a binder composition whose curing releases water, notably through a condensation reaction, for example whose curing releases at least 5%, at least 8% or at least 10% by weight of water with respect to the dry weight of the binder composition prior to curing. Preferably, the binder composition used for the core layer is a binder composition i) whose curing does not release water and notably does not involve a condensation reaction or ii) whose curing release less water than curing of the binder composition of the surface layer(s). The combination of:
a) generation of steam in the surface layer(s) during pressing and heating of the particle board, notably derived from a combination of water present in an aqueous surface layer binder composition and water generated during curing of the surface layer binder composition facilitates heat transfer to the core layer to cure the core layer; and
b) avoiding or limiting generation of water due to curing of the core binder composition which would generate quantities of steam in the core layer for which evacuation would be difficult; allows for shorter press time.

The carbohydrate binder comprising carbohydrate reaction products, when cured, may comprise Maillard reaction products, for example melanoidins; it may comprise polyester components.

During the curing of the wood particle board, the internal temperature of the board, notably the temperature at the centre of the board in its thickness direction, may be raised to a temperature of:
a) ≥ 100 °C, ≥ 110 °C, ≥ 115 °C, ≥ 120 °C, ≥ 130 °C or ≥ 140 °C, and/or
b) ≤ 200°C, ≤ 180°C, ≤ 170 °C or ≤ 160°C.

The curing temperature, notably the surface temperature of the press or platens, may range from 110°C to 280°C. Further examples of the curing temperature include ranges of 110 to 260°C, to 240°C, to 220°C or to 210°C.

The mat of resinated particles may be pressed, e.g. in a hot press, at a pressure which is ≥ 20 bar, ≥ 25 bar or ≥ 30 bar and/or ≤ 80 bar, ≤ 75 bar, ≤ 70 bar or ≤ 65 to obtain a cured particle board.

The mat of resinated particles may be pressed at a press factor in second per mm of thickness of the wood particle board which is ≥ 2 seconds/mm, ≥ 3 seconds/mm, ≥ 4 seconds/mm or ≥ 5 seconds/mm and/or ≤ 60 seconds/mm, ≤ 40 seconds/mm, ≤ 30 seconds/mm or ≤ 20 seconds/mm to obtain a cured particle board. Thus, the press-time may depend on the thickness of the wood particle board.

The wood particle boards, notably once cured, may comprise at least 70%, at least 80%, at least 90% or at least 95% by weight of wood particles.

Embodiments of the invention will now be described, by way of example only.

### Example:

Several three layer particle board samples of 300 x 300 mm² having a total thickness of 16 mm with approximately 5 mm thick surface layers and a target density of 650 kg/m³ were prepared according to a standard procedure. For the core layer, wood particles having particle dimensions between 1.25 mm and 4 mm and having a residual moisture content of about 7 wt.% (based on oven dried wood weight) were sprayed with binder composition having the composition and solid content as described below, such as to reach the binder loading described below, and with potential additives as described below, and were tumbled for uniform coating. Similarly, for the surface layer, surface layer particles having particle dimensions of about 1.25 mm or less and moisture content of about 3 % were sprayed with relevant binder compositions at relevant loadings, and with potential additives and were tumbled for uniform coating.

The core layers of each of the samples was the same and comprised wood particles (1.25 - 4 mm) having a residual moisture content of approximately 7 wt. % and a urea-formaldehyde binder at a loading of 7.5 wt. % (binder solids by weight of resinated wood particles). The wood particles were treated with 0.60 wt.% SP45 wax . The urea-formaldehyde resin comprised 4.5 wt.% (of total binder) of an ammonium nitrate catalyst.

The different particle board samples had different surface layers as shown in Table 1 below. The loading of surface layer binder was 10 wt.% for all samples. For samples B1 - B9, a carbohydrate based binder as defined below was used; for samples B10 - B12, the same urea-formaldehyde binder as in the core layer was used, but at the said loading of 10 wt.%.

The carbohydrate based surface layer binder compositions used in this example comprise an aqueous mixture of dextrose monohydrate ("DMH") and fructose and hexamethylene diamine ("HMDA") as shown in Table 1 below:

**Table 1: Binder composition of surface layers prior to reaction**

| Board number | DMH (parts by dry weight) | Fructose (parts by dry weight) | HMDA (parts by dry weight) | Solids content % | Glycerol addition |
|---|---|---|---|---|---|
| B1, B2, B3 | 43.5 | 43.5 | 13 | 61 % | 5:95 |
| B4, B5 | 43.5 | 43.5 | 13 | 61% | 10:90 |
| B6, B7 | 43.5 | 43.5 | 13 | 61% | 0 |
| B8, B9 | 43.5 | 43.5 | 13 | 69% | 0 |
| B10, B11, B12 | Comparative examples using UF based surface layer binder composition | | | | |

The solid content in Table 1 is the solid content (%wt) of the aqueous binder compositions prior to any addition of glycerol. For examples B1, B2 and B3 an initial aqueous binder solution was made by combining the DMH, fructose and water; 5 parts by weight glycerol were then added to 95 parts by weight of this initial aqueous binder solution to provide the aqueous binder composition. Similarly, for examples B4 and B4 10 parts by weight glycerol were added to 90 parts by weight of the initial aqueous binder solution to provide the aqueous binder composition.

Boards B10, B11 and B12 include a UF based surface binder containing wood particles (< 1.25 mm) having a residual moisture content of approximately 10 wt. % and a urea-formaldehyde binder at a loading of 10 wt. % (binder solids by weight of resinated wood particles). The wood particles were treated with 0.5 wt.% SP45 wax. The urea-formaldehyde resin composition comprised 0.5 wt.% (of total binder, on a dry basis) of an ammonium nitrate catalyst.

In order to fabricate the sample boards, a mass of coated wood particles adapted to achieve a target board density of 650 kg/m³ was transferred into a forming box in order to form three layered board samples of 300x300x16 mm, the larger particle sizes being used for the core layer and the smaller particle sizes being used for the surface layers. The quantity of resinated surface layer particles was adapted to form surface layers each having a thickness of approximately 3 mm. Board samples were pressed under 56 bar, to 16mm thickness using metal stops, at a target platen temperature of 230 °C for a given time period to reach the press factors (seconds per mm thickness for a 16 mm thick board) indicated in Table 2.

The test samples were subjected to an internal bond strength test, such as per EN319, intended to evaluate the tensile strength perpendicular to the plane of the test piece and expressed in N/mm².

The particle board samples were also tested for Surface Soundness. To that effect, a circular groove (inner diameter of 35.7 mm) is cut 0.3 mm deep into the test sample. A steel pad is glued onto the board surface, on the cut surface portion. After the adhesive has hardened a tensile force is applied at constant speed so that failure occurs, preferably within the surface layer; the force at failure is recorded and expressed in Newton per square millimetre. See for instance BS EN311.

**Table 2**

| **Board number** | **Surface binder loading** | **Glycerol : binder** | **Press factor s/mm** | **Average board density kg/m³** | **IB N/mm²** | **Surface Soundness bottom N/mm²** | **Surface Soundness top N/mm²** |
|---|---|---|---|---|---|---|---|
| B1 | Carbo 10% | 5:95 | 7 | 697.4 | 0.38 | 1.15 | 1.07 |
| B2 | Carbo 10% | 5:95 | 6 | 645.4 | 0.35 | 0.97 | 0.90 |
| B3 | Carbo 10% | 5:95 | 5.5 | 650.9 | 0.25 | 1.00 | 0.89 |
| B4 | Carbo 10% | 10:90 | 6 | 640.1 | 0.29 | 1.02 | 0.97 |
| B5 | Carbo 10% | 10:90 | 7 | 662.2 | 0.40 | 1.14 | 0.92 |
| B6 | Carbo 10% | 0 | 6 | 644.1 | 0.33 | 0.89 | 0.92 |
| B7 | Carbo 10% | 0 | 7 | 677.5 | 0.45 | 0.77 | 1.07 |
| B8 | Carbo 10% | | 6 | 626.2 | 0.32 | 0.80 | 0.89 |
| B9 | Carbo 10% | | 7 | 657.1 | 0.34 | 1.02 | 1.14 |
| B10 | UF 10% | | 5.5 | 623.8 | 0.18 | 0.70 | 0.58 |
| B11 | UF 10% | | 6 | 645.3 | 0.30 | 0.77 | 0.56 |
| B12 | UF 10% | | 7 | 669.1 | 0.40 | 0.86 | 0.74 |

| | | | | | | | |
|---|---|---|---|---|---|---|---|
| Carbo: carbohydrate based binder as per Table 1 UF: urea-formaldehyde based binder IB: Internal bond strength | | | | | | | |

It was noticed that boards B10, B11 and B12 comprising UF-based binder (57% solids) bonded surface layer particles showed small surface defects on more than 60% of the panel bottom surface, and on approx. 25% of the panel top surface.

In contrast, boards B8 and B9 comprising carbohydrate based binder (69% solids) bonded surface layer particles show significantly fewer surface defects on the back side (about 40%) as well as on the top side (approx. 15%). Boards B6 and B7 comprising carbohydrate based binder (61% solids) bonded surface layer particles show even further reduced surface defects (about 5% and 15%, respectively, of both sides).

When adding 10 wt.% (on a dry basis) glycerol to the carbohydrate based binder composition for bonding the surface layer particles, see boards B4 and B5, the surfaces show further reduced defects: less than 5% on both sides of B4 and less than 10% on the backside with no defects on the top side of B5.

When adding 5 wt.% only of glycerol to the carbohydrate based binder composition, as in the case of boards B1, B2 and B3, the presence of surface defects varies between 40 and 50% of the back surface but falls to approx. 15 % of the top side for B1 to no defect on the top side for B2 and B3.

The above-mentioned defects are small white spots which are an indicator of surface defects that become evident after melamining.

The surface soundness is significantly improved when comparing boards B1 to B9 and prior art type boards, represented by B10, B11 and B12. More particularly in the case of B7, the surface soundness of the back surface was such that the rupture occurred in the core layer. This shows that the surface layer was strongly bonded. In contrast thereto, in the case of the UF bonded boards B10 and B11, the rupture occurred in the top outside surface, and in the case of B12, the rupture occurred in the back outside surface.

## Claims

1. A multi-layer particle board comprising at least one core layer and a surface layer, the surface layer particles being bonded by a binder comprising carbohydrate based reaction products and the core layer particles being bonded by a binder other than the carbohydrate based binder resin used in the surface layer, wherein the binder comprising carbohydrate based reaction product comprises: reaction products of a reducing sugar and a nitrogen source.

2. A multi-layer particle board according to claim 1 wherein the core layer binder is selected from a binders comprising: phenol formaldehyde resin; urea formaldehyde resin; and isocyanate based binder resin, such as methylene diphenyl diisocyanate.

3. A multi-layer particle board according to claim 1 or 2 wherein the nitrogen source is an amine component, more particularly a primary amine component.

4. A multi-layer particle board according to any of claims 1 - 3 wherein the reducing sugar is selected from the group consisting of monosaccharides, disaccharides, polysaccharides or a reaction product thereof.

5. A multi-layer particle board according to any of claims 3 - 4 wherein the nitrogen source is selected from: NH₃; an inorganic amine; an organic amine comprising at least one primary amine group; a polyamine; an organic or inorganic salt, notably an ammonium salts, of any of the aforementioned.

6. A multi-layer particle board according to claim 5 wherein the nitrogen source comprises a polyamine having the structure H₂N-Q-NH₂, wherein Q is: an alkanediyl, notably an alkanediyl group selected from -C₂-C₂₄-; an alkanediyl group selected from -C₂-C₉-; or an alkanediyl group selected from C₃-C₇-; , preferably Q is a C₆ alkanediyl, cycloalkanediyl, such as cyclohexanediyl, cyclopentanediyl or cyclobutanediyl, heteroalkanediyl, or cycloheteroalkanediyl, each of which may be optionally substituted; , or a divalent benzyl radical.

7. A multi-layer particle board according to claim 6 wherein the polyamine is selected from 1,6-diaminohexane (hexamethylenediamine, HMDA) and 1,5-diamino-2-methylpentane (2-methyl-pentamethylenediamine).

8. A multi-layer particle board according to claim 5 wherein the polyamine is selected from polyether-polyamine and polymeric polyamine.

9. A multi-layer particle board according to any of claims 3 to 8 wherein the ratio of carbonyl groups in the reducing sugar to reactive amino groups in the amine components of the surface layer binder is in the range of 5:1 to 1:2, preferably in the range of 5:1 to 1:1.8, 5:1 to 1:1.5, 5:1 to 1:1.2, 5:1 to 1:1, 5:1 to 1:0.8 and 5:1 to 1:0.5, 4:1 to 1:2, 3.5:1 to 1:2, 3:1 to 1:2, 2.5:1 to 1:2, 2:1 to 1:2 and 1.5:1 to 1:2.

10. A multi-layer particle board according to any preceding claim wherein the surface layer binder comprises: a non-carbohydrate polyhydroxy component, notably selected from glycerol, a polyalkylene glycol, polyethylene glycol, polypropylene glycol, trimethylolpropane, pentaerythritol, polyvinyl alcohol, partially hydrolyzed polyvinyl acetate, fully hydrolyzed polyvinyl acetate, and mixtures thereof; and/or reaction products of a non-carbohydrate polyhydroxy component, notably selected from the aforementioned.

11. A multi-layer particle board according to any preceding claim further comprising at least one surface covering sheet or laminate.

12. A process for the manufacture of multi-layer particle boards comprising at least one core layer and a surface layer, comprising
provision of core layer wood particles suitable for the core layer and contacting the core layer wood particles with a core layer binder composition to provide resinated core layer wood particles,
provision of surface layer wood particles and contacting the surface layer wood particles with a surface layer binder composition to provide resinated surface layer wood particles, arrangement of layers of the resinated particles to form a layered mat of loosely arranged particles comprising in sequence or reverse sequence a first surface layer comprising resinated surface layer particles and at least one core layer comprising resinated core layer particles, and possibly a second surface layer comprising resinated surface layer particles, and subjecting the layered mat of resinated particles to pressure and curing,
wherein the surface layer binder composition is selected from binder compositions comprising i) a reducing sugar and ii) a nitrogen source and/or reaction products of (i) and (ii) and the core layer binder composition is a binder compositions other than the surface layer binder composition.

13. Process according to claim 12 **characterized by** one or more of the following features:
13.13 wherein the core layer binder composition is selected from: phenol formaldehyde based binder compositions; urea formaldehyde based binder compositions; and isocyanate based binder compositions notably methylene diphenyl diisocyanate;
13.14 wherein the nitrogen source is an amine component, preferably a primary amine component;
13.15 wherein, the surface layer binder composition comprises a ratio of carbonyl groups in the reducing sugar to reactive amino groups in the nitrogen source in the range of 5:1 to 1:2;
13.16 wherein the surface layer binder composition comprises: (a) reducing sugar reactant(s) and a nitrogen source; and/or (b) curable reaction product(s) of reducing sugar reactant(s) and a nitrogen source; and wherein the combined weight of (a) and (b) makes up at least 30%, preferably at least 50%, more preferably at least 70% by dry weight of the surface layer binder composition;
13.17 wherein the surface layer binder composition comprises 50 to 90% by dry weight of reducing sugar(s) and 10 to 50 % by dry weight of nitrogen source component(s), based on the combined dry weight of the reducing sugar and nitrogen source components;
13.18 wherein the surface layer binder composition further comprises 0.1 - 25% by dry weight of non-carbohydrate polyhydroxy component(s), preferably selected from glycerol, polyethylene glycol, polypropylene glycol, trimethylolpropane, pentaerythritol, polyvinyl alcohol, partially hydrolyzed polyvinyl acetate, fully hydrolyzed polyvinyl acetate, and mixtures thereof, preferably 2 - 18 % by dry weight glycerol;
13.19 wherein the surface layer binder composition is at least partly pre-reacted;
13.20 wherein a post-curing is applied, notably by application of energy to the particle boards subsequent to release from a curing press.

14. A multi-layer particle board comprising at least one core layer and a surface layer, in which the surface layer comprises surface layer wood particles held together by a binder obtained by curing a carbohydrate based surface layer binder composition; and
the core layer comprises core layer wood particles held together by curing a core layer binder composition, the core layer binder composition being a binder composition which is different from the surface layer binder composition, preferably a non-carbohydrate based binder composition, wherein the surface layer binder composition comprises a reducing sugar and a nitrogen source in the form of an aqueous composition in which the dry weight makes up 10% or more and 95% or less of the total weight of the aqueous binder composition.

15. A multi-layer particle board according to claim 14, comprising, once cured, at least 70%, at least 80%, at least 90%, or at least 95% by weight of wood particles.

## Patentansprüche

1. Mehrschicht-Spanplatte, umfassend mindestens eine Kernschicht und eine Oberflächenschicht, wobei die Oberflächenschichtpartikel durch ein Kohlenhydrat-Reaktionsprodukte aufweisendes Bindemittel gebunden sind, und die Kernschichtpartikel durch ein anderes Bindemittel als das auf Kohlenhydrat basierende, in der Oberflächenschicht verwendete Bindemittelharz gebunden sind, wobei das Kohlenhydrat-Reaktionsprodukt aufweisende Bindemittel Reaktionsprodukte von reduzierendem Zucker und einer Stickstoffquelle aufweist.

2. Mehrschicht-Spanplatte nach Anspruch 1, wobei das Kernschichtbindemittel aus einem Bindemittel ausgewählt ist, umfassend: Phenolformaldehydharz; Harnstoff-Formaldehydharz; und Bindemittelharz auf Isocyanatbasis, wie Methylendiphenyldiisocyanat.

3. Mehrschicht-Spanplatte nach Anspruch 1 oder 2, wobei die Stickstoffquelle eine Aminkomponente, insbesondere eine primäre Aminkomponente, ist.

4. Mehrschicht-Spanplatte nach einem der Ansprüche 1 bis 3, wobei der reduzierende Zucker ausgewählt ist aus der Gruppe bestehend aus Monosacchariden, Disacchariden, Polysacchariden oder einem Reaktionsprodukt davon.

5. Mehrschicht-Spanplatte nach einem der Ansprüche 3 bis 4, wobei die Stickstoffquelle ausgewählt ist aus: NH₃; einem anorganischen Amin; einem organischen Amin, das mindestens eine primäre Amingruppe umfasst; einem Polyamin; einem organischen oder anorganischen Salz, insbesondere Ammoniumsalze, der vorstehend genannten.

6. Mehrschicht-Spanplatte nach Anspruch 5, wobei die Stickstoffquelle ein Polyamin mit der Struktur H₂N-Q-NH₂ umfasst, wobei Q ein Alkandiylgruppe, insbesondere eine Alkandiylgruppe ausgewählt aus -C₂-C₂₄-; eine Alkandiylgruppe ausgewählt aus -C₂-C₉-; oder eine Alkandiylgruppe ausgewählt aus -C₃-C₇-; wobei Q vorzugsweise ein C₆-Alkandiyl, ein Cycloalkandiyl, wie Cyclohexandiyl, Cyclopentandiyl oder Cyclobutandiyl, ein Heteroalkandiyl oder ein Cycloheteroalkandiyl ist, wobei jedes davon gegebenenfalls substituiert sein kann, oder ein zweiwertiger Benzylrest ist.

7. Mehrschicht-Spanplatte nach Anspruch 6, wobei das Polyamin aus 1,6-Diaminohexan (Hexamethylendiamin, HMDA) und 1,5-Diamino-2-methylpentan(2-Methylpentamethylendiamin) ausgewählt ist.

8. Mehrschicht-Spanplatte nach Anspruch 5, wobei das Polyamin aus Polyetherpolyamin und polymerem Polyamin ausgewählt ist.

9. Mehrschicht-Spanplatte nach einem der Ansprüche 3 bis 8, wobei das Verhältnis von Carbonylgruppen im reduzierenden Zucker zu reaktiven Aminogruppen in den Aminkomponenten des Oberflächenschichtbindemittels im Bereich von 5:1 bis 1:2, vorzugsweise im Bereich von 5:1 bis 1:1,8, 5:1 bis 1:1,5, 5:1 bis 1:1,2, 5:1 bis 1:1, 5:1 bis 1:0,8 und 5:1 bis 1:0,5, 4:1 bis 1:2, 3,5:1 bis 1:2, 3:1 bis 1:2, 2,5:1 bis 1:2, 2:1 bis 1:2 und 1,5:1 bis 1:2, liegt.

10. Mehrschicht-Spanplatte nach einem der vorhergehenden Ansprüche, wobei das Oberflächenschichtbindemittel eine Nicht-Kohlenhydrat-Polyhydroxykomponente, insbesondere ausgewählt aus Glycerin, einem Polyalkylenglykol, Polyethylenglykol, Polypropylenglykol, Trimethylolpropan, Pentaerythrit, Polyvinylalkohol, teilweise hydrolysiertes Polyvinylacetat, vollständig hydrolysiertes Polyvinylacetat und Mischungen davon; und/oder Reaktionsprodukte einer Nicht-Kohlenhydrat-Polyhydroxykomponente, insbesondere ausgewählt aus den zuvor genannten, umfasst.

11. Mehrschicht-Spanplatte nach einem der vorhergehenden Ansprüche, umfassend mindestens eine Oberflächenabdeckfolie oder -Laminat.

12. Verfahren zur Herstellung von Mehrschicht-Spanplatten, umfassend mindestens eine Kernschicht und eine Oberflächenschicht, umfassend:
Bereitstellen von Kernschichtholzpartikeln, die für die Kernschicht geeignet sind, und Kontaktieren der Kernschichtholzpartikel mit einer Kernschichtbindemittelzusammensetzung, um beschichtete Kernschichtholzpartikel bereitzustellen,
Bereitstellen von Oberflächenschichtholzpartikeln und Kontaktieren der Oberflächenschichtholzpartikel mit einer Oberflächenschichtbindemittelzusammensetzung, um beschichtete Oberflächenschichtholzpartikel bereitzustellen,
Anordnung von Schichten beschichteter Partikeln, um eine geschichtete Matte aus lose angeordneten Partikeln zu bilden, umfassend in Folge oder in umgekehrter Reihenfolge eine erste beschichtete Oberflächenschichtpartikel umfassende Oberflächenschicht, und mindestens eine beschichtete Kernschichtpartikel umfassende Kernschicht, und möglicherweise eine zweite beschichtete Oberflächenschichtpartikel umfassende Oberflächenschicht, und
Verarbeitung der geschichteten Matte aus beschichteten Partikeln unter Druck- und Aushärtungsbedingungen,
wobei die Oberflächenschicht-Bindemittelzusammensetzung ausgewählt ist aus Bindemittelzusammensetzungen umfassend i) einen reduzierenden Zucker und ii) eine Stickstoffquelle, und/oder Reaktionsprodukte von (i) und (ii) und die Kernschicht-Bindemittelzusammensetzung eine andere Bindemittelzusammensetzung aufweist als die Oberflächenschicht-Bindemittelzusammensetzung.

13. Verfahren nach Anspruch 12 **gekennzeichnet durch** eines oder mehrere der folgenden Kennzeichen:
13.13 wobei die Kernschicht-Bindemittelzusammensetzung ausgewählt ist aus:
Bindemittelzusammensetzungen auf Phenolformaldehydbasis;
Bindemittelzusammensetzungen auf Harnstoffformaldehydbasis; und
Bindemittelzusammensetzungen auf Isocyanatbasis, insbesondere Methylendiphenyldiisocyanat;
13.14 wobei die Stickstoffquelle eine Aminkomponente ist, vorzugsweise eine primäre Aminkomponente;
13.15 wobei die Oberflächenschicht-Bindemittelzusammensetzung ein Verhältnis von Carbonylgruppen im reduzierenden Zucker zu reaktiven Aminogruppen in der Stickstoffquelle im Bereich von 5:1 bis 1:2 aufweist;
13.16 wobei die Oberflächenschicht-Bindemittelzusammensetzung Folgendes umfasst: (a) reduzierende Zuckerreaktanden und eine Stickstoffquelle; und/oder (b) ein härtbares Reaktionsprodukt aus reduzierenden Zuckerreaktanden und einer Stickstoffquelle; und wobei das kombinierte Gewicht von (a) und (b) mindestens 30 Gew.-%, vorzugsweise mindestens 50 Gew.-%, stärker bevorzugt mindestens 70 Gew.-%, bezogen auf das Trockengewicht, der Oberflächenschicht-Bindemittelzusammensetzung ausmacht;
13.17 wobei die Oberflächenschicht-Bindemittelzusammensetzung 50 bis 90 Gew.-% des reduzierenden Zuckers und 10 bis 50 Gew.-% der Stickstoffquellenkomponente (n), bezogen auf das kombinierte Trockengewicht des reduzierenden Zuckers und der Stickstoffquelle, aufweist.
13.18 wobei das Bindemittel für die Oberflächenschicht ferner 0,1 bis 25 Gew.-%, bezogen auf dasTrockengewicht, einer Nichtkohlenhydratpolyhydroxykomponente(n) umfasst, vorzugsweise ausgewählt aus Glycerol, Polyethylenglykol, Polypropylenglykol, Trimethylolpropan, Pentaerythrit, Polyvinylalkohol, teilweise hydrolysiertes Polyvinylacetat, vollständig hydrolysiertes Polyvinylacetat und Mischungen davon, vorzugsweise 2 bis 18 Gew.-% Glycerin, bezogen auf das Trockengewicht;
13.19 wobei die Oberflächenschicht-Bindemittelzusammensetzung mindestens teilweise vorreagiert ist;
13.20 wobei eine Nachhärtung angewendet wird, insbesondere durch Aufbringen von Energie auf die Spanplatten nach der Freigabe aus einer Härtepresse.

14. Mehrschicht-Spanplatte umfassend mindestens eine Kernschicht und eine Oberflächenschicht, wobei die Oberflächenschicht Oberflächenschicht-Holzpartikel aufweist, die durch ein Bindemittel zusammengehalten werden, das durch Härten einer auf Kohlenhydrat basierenden Oberflächenschicht-Bindemittelzusammensetzung erhalten wird; und
die Kernschicht Kernschichtholzpartikel umfasst, die durch Härten einer Kernschichtbindemittelzusammensetzung zusammengehalten werden, wobei die Kernschichtbindemittelzusammensetzung eine Bindemittelzusammensetzung ist, die sich von der Oberflächenschicht-Bindemittelzusammensetzung unterscheidet, vorzugsweise eine Bindemittelzusammensetzung auf Nicht-Kohlenhydratbasis, wobei die Oberflächenschicht-Bindemittelzusammensetzung einen reduzierenden Zucker und eine Stickstoffquelle umfasst und als wässrige Zusammensetzung vorliegt, in der das Trockengewicht 10% oder mehr und 95% oder weniger vom Gesamtgewicht der wässrigen Bindemittelzusammensetzung ausmacht.

15. Mehrschicht-Spanplatte nach Anspruch 14, die gehärtet wenigstens 70 Gew.-%, wenigstens Gew.-80%, wenigstens 90 Gew.-%, oder wenigstens 95 Gew.-% Holzpartikel aufweist.

## Revendications

1. Panneau de particules multicouche comportant au moins une couche centrale et une couche de surface, les particules de couche de surface étant liées par un liant comprenant des produits de réaction à base d'hydrate de carbone, et les particules de couche centrale étant liées par un liant différant de la résine à base d'hydrate de carbone dans la couche de surface, le liant comprenant des produits de réaction à base d'hydrate de carbone comportant des produits de réaction d'un sucre réducteur et d'une source d'azote.

2. Panneau de particules multicouche selon la revendication 1 dans lequel le liant de couche centrale est choisi parmi les liants comportant une résine de phénol formaldéhyde, une résine d'urée formaldéhyde et une résine de liant à base d'isocyanate, comme le méthylène diphényle diisocyanate.

3. Panneau de particules multicouche selon la revendication 1 ou 2 dans lequel la source d'azote est un composé d'amine, plus particulièrement un composé d'amine primaire.

4. Panneau de particules multicouche selon l'une des revendications 1 à 3 dans lequel le sucre réducteur est choisi parmi le groupe constitué par les monosaccharides, les disaccharides, les polysaccharides ou les produits de réaction de ceux-ci.

5. Panneau de particules multicouche selon l'une des revendications 1 à 4 dans lequel la source d'azote est choisie parmi NH₃, une amine inorganique, une amine organique comportant au moins un groupement d'amine primaire ; une polyamine, un sel organique ou inorganique, notamment un sel d'ammonium, de l'une de celle-ci.

6. Panneau de particules multicouche selon la revendication 5 dans lequel la source d'azote comporte une polyamine de structure H₂N-Q-NH₂, dans laquelle Q est un alkanediyle, notamment un groupement alkanediyle choisi parmi -C₂-C₂₄-, un groupement alkanediyle choisi parmi -C₂-C₉- ou un groupement alkanediyle choisi parmi -C₂-C₇-, Q étant de préférence un C₆ alkanediyle, un cycloalkanediyle, comme le cyclohexanediyle, le cyclopentanediyle ou le cyclobutanediyle, un hétéroalkanediyle ou cyclohétéroalkanediyle, chacun étant éventuellement substitué, ou un radical benzyle divalent.

7. Panneau de particules multicouche selon la revendication 6 dans lequel la polyamine est choisie parmi le 1,6-diaminohexane(hexaméthylènediamine, HMDA) et le 1,5-diamino-2-méthylpentane(2-méthyl-pentaneméthylènediamine).

8. Panneau de particules multicouche selon la revendication 6 dans lequel la polyamine est choisie parmi une polyéther-polyamine et une polyamine polymère.

9. Panneau de particules multicouche selon l'une des revendication 3 à 8 dans lequel le rapport de groupements carbonyle dans le sucre réducteur aux groupements amino réactifs dans le composé d'amine du liant de couche de surface est dans la gamme de 5:1 à 1:2, de préférence dans la gamme de 5:1 à 1:1,8, de 5:1 à 1:1,5, de 5:1 à 1:1,2, de 5:1 à 1:1, de 5:1 à 1:0,8 et de 5:1 à 1:0,5, de 4:1 à 1:2, de 3,5:1 à 1:2, de 3:1 à 1:2, de 2,5:1 à 1:2, de 2:1 à 1:2 et de 1,5:1 à 1:2.

10. Panneau de particules multicouche selon l'une des revendications précédentes dans lequel le liant de couche de surface comporte un composé polyhydroxy qui n'est pas un hydrate de carbone, notamment choisi parmi le glycérol, un polyalkene glycol, le polyéthylène glycol, le polypropylène glycol, le triméthylol propane, le pentaérythritol, l'alcool de polyvinyle, l'acétate de polyvinyle partiellement hydrolysé, l'acétate de polyvinyle totalement hydrolysé et des mélanges de ceux-ci et/ou des produits de réaction d'un composé qui n'est pas un hydrate de carbone, choisi parmi ceux cités ci-dessus.

11. Panneau de particules multicouche selon l'une des revendications précédentes comportant en outre au moins une feuille ou un laminé de revêtement de surface.

12. Procédé pour la fabrication de panneaux de particules multicouche comportant au moins une couche centrale et une couche de surface, le procédé comprenant la mise à disposition de particules de bois de couche centrale convenant pour la couche centrale et la mise en contact des particules de bois de couche centrale avec une composition de liant de couche centrale afin de générer des particules de bois de couche centrale enzymées,
la mise à disposition de particules de bois de couche de surface et la mise en contact des particules de bois de couche de surface avec une composition de liant de couche de surface afin de générer des particules de bois de couche de surface enzymées,
l'agencement de couches de particules enzymées pour former un mat stratifié de particules agencées de manière lâche, comportant dans l'ordre ou dans l'ordre inverse une première couche de surface comprenant des particules de couche de surface enzymées et au moins une couche centrale comprenant des particules de couche de centrale enzymées, et éventuellement une deuxième couche de surface comprenant des particules de couche de surface enzymées, et
mise sous pression et sous conditions de durcissement du mat stratifié de particules enzymées,
la composition de liant de couche de surface étant choisie parmi les compositions de liant comprenant i) un sucre réducteur et ii) une source d'azote et/ou des produits de réaction de i) et ii) et la composition de liant de couche centrale étant une composition de liant différente de la composition de liant de couche de surface.

13. Procédé selon la revendication 12 **caractérisé par** l'une ou plusieurs des caractéristiques suivantes :
13.13 dans lequel la composition de liant de couche centrale est choisi parmi les compositions à base de phénol formaldéhyde, les compositions à base d'urée formaldéhyde et les compositions à base d'isocyanate, notamment le méthylène diphényle diisocyanate ;
13.14 dans lequel la source d'azote est un composé d'amine, de préférence un composé d'amine primaire ;
13.15 dans lequel la composition de liant de couche de surface présente un rapport de groupements carbonyle dans le sucre réducteur aux groupements amino réactifs de la source d'azote dans la gamme allant de 5:1 à 1:2 ;
13.16 dans lequel la composition de liant de couche de surface comporte (a) des réactants de sucre réducteur et une source d'azote et/ou (b) des produits de réaction de réactant de sucre réducteur avec une source d'azote ; et dans lequel le poids combiné de (a) et (b) se monte à au moins 30%, de préférence à au moins 50%, plus particulièrement à au moins 70% en poids de matière sèche de la composition de liant de couche de surface ;
13.17 dans lequel la composition de liant de couche de surface comprend 50 à 90 % en poids de matière sèche de sucre(s) réducteur(s) et 10 à 50 % en poids de matière sèche de composé source d'azote, basé sur le poids combiné en matière sèche des composés de sucre réducteur et de source d'azote ;
13.18 dans lequel la composition de liant de couche de surface comprend, en outre, 0,1 - 25 % en poids de matière sèche de composé(s) polyhydroxy qui ne sont pas des hydrates de carbone, de préférence choisis parmi le glycérol, le polyéthylène glycol, le polypropylène glycol, le triméthyle propane, le pentaérythritol, l'alcool de polyvinyle, l'acétate de polyvinyle partiellement hydrolysé, l'acétate de polyvinyle totalement hydrolysé, et mélanges de ceux-ci, de préférence 2 - 18 % en poids en matière sèche de glycérol ;
13.19 dans lequel la composition de liant de couche de surface est au moins partiellement pré-réagie ;
13.20 dans lequel on applique un durcissement ultérieur, notamment par application d'énergie aux panneaux de particules à la suite de la sortie de la presse de durcissement.

14. Panneau de particules multicouche comportant au moins une couche centrale et une couche de surface, dans lequel la couche de surface comporte des particules de bois de couche de surface liées entre elles par un liant obtenu par durcissement d'une composition de liant de couche de surface à base d'hydrate de carbone ; et la couche centrale comprenant des particules de bois de couche centrale liées entre elles par le durcissement d'une composition de liant de couche centrale, la composition de liant de couche centrale étant une composition de liant qui est différente de la composition de liant de la couche de surface, de préférence une composition de liant qui n'est pas à base d'hydrate de carbone, la composition de liant de la couche de surface comprenant un sucre réducteur et une source d'azote, et ce sous forme d'une composition aqueuse dans laquelle la matière sèche s'élève de 10% ou plus à 95% ou moins du poids total de la composition aqueuse de liant.

15. Panneau de particules multicouche selon la revendication 14 comprenant, à l'état durci, au moins 80%, au moins 90%, ou au moins 95% en poids de particules de bois.
